# EUROPEAN PATENT APPLICATION

(11) **EP 1 927 741 A1**
(43) Date of publication of application: **04.06.2008**
(21) Application number: 06256000.8
(22) Date of filing: 23.11.2006
(51) Int. Cl.: F02D 41/20, F02D 41/22

(54) **A method of operating a piezoelectric device**

(71) Applicant: Delphi Technologies, Inc., Troy, Michigan 48007 (US)
(72) Inventor: Sykes, Martin, Rainham, Kent, ME8 8RB (GB); Hopley, Daniel, Chislehurst, Kent, BR7 5EG (GB)
(74) Representative: Hopley, Joanne Selina

(57) **Abstract**

A method of operating a piezoelectric device (2) having a piezoelectric actuator (4) comprising enabling a device activation switch means (Q1, Q2) to cause electrical current flow through the actuator (4) to increase (i.e. increasing the charge transfer rate), disabling the device activation switch means (Q1, Q2) to cause the current through the actuator (4) to decrease (i.e. decreasing the charge transfer rate), monitoring the status of the device activation switch means (Q1, Q2), measuring the time period between the step of enabling and disabling the device activation switch means (Q1, Q2), and calculating the average current (i.e. charge transfer rate) based on the measured time period. The method of the invention has particular utility in the field of piezoelectrcially operated fuel injectors.

## Description

### Technical Field

The invention relates to a method of operating a piezoelectric device. More specifically, the invention relates to a method of operating a piezoelectric device so as to provide a means to monitor the electrical current applied to the device for activation thereof. The invention has particular utility in the field of automotive piezoelectrically operated fuel injectors although this is not to be considered limiting to the scope of the invention as defined by the claims.

### Background to the Invention

It is known to use piezoelectric actuators in fuel injectors of internal combustion engines. Such piezoelectrically operable fuel injectors provide a high degree of control over the timing of injection events within the combustion cycle and the volume of fuel that is delivered during an injection event. This permits improved control over the combustion process which is beneficial in terms of exhaust emissions. An injector of this type is described in the applicant's European Patent No. EP 0955901B. Such fuel injectors may be employed in compression ignition (diesel) engines or spark ignition (petrol) engines.

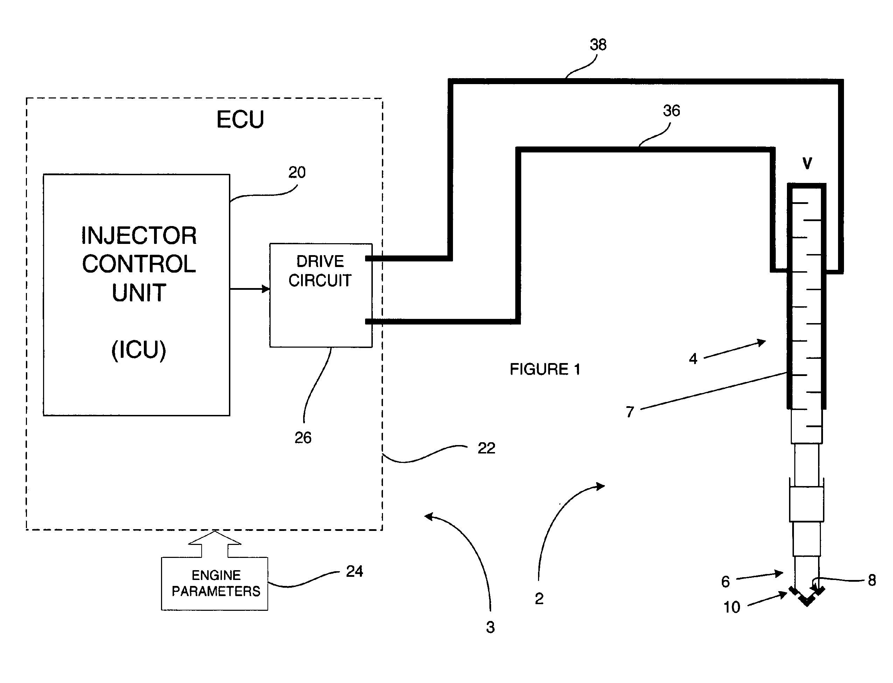

A known piezoelectric injector 2 and its associated control system 3 are shown schematically in Figure 1. The piezoelectric injector 2 includes a piezoelectric actuator 4 that is operable to control the position of an injector valve needle 6 relative to a valve needle seat 8. As known in the art, the piezoelectric actuator 4 includes a stack 7 of piezoelectric elements that expands and contacts in dependence on the voltage across the stack 7. The axial position, or 'lift', of the valve needle 6 is controlled by applying a variable voltage 'V' to the piezoelectric actuator 4. Although not shown in Figure 1, it should be appreciated that, in practice, the variable voltage would be applied to the actuator by connecting a power supply plug to terminals of the injector.

By application of an appropriate voltage to the actuator 7, the valve needle 6 is caused either to disengage the valve seat 8, in which case fuel is delivered into an associated combustion chamber (not shown) through a set of nozzle outlets 10, or is caused to engage the valve seat 8, in which case fuel delivery through the outlets 10 is prevented.

The piezoelectric injector 2 is controlled by an injector control unit 20 (ICU) that forms an integral part of an engine control unit 22 (ECU). In practice, the ICU 20 would control several such fuel injectors, although only a single fuel injector is shown in Figure 1 for clarity. The ECU 22 monitors a plurality of engine parameters 24 and calculates an engine power requirement signal (not shown) which is input to the ICU 20. In turn, the ICU 20 calculates a required injection event sequence to provide the required power for the engine and operates an injector drive circuit 26 accordingly. The injector drive circuit 26 is connected to the injector 2 by way of first and second power supply leads 36, 38 by which means the drive circuit 26 is operable to apply a differential voltage to the injector 2. Although the drive circuit 26 is shown as integral to the ECU 22 in Figure 1, it should be appreciated that this is not essential.

In order to initiate an injection, the injector drive circuit 26 causes the differential voltage applied to the injector 2 to transition from a high voltage (typically 200 V) at which no fuel delivery occurs, to a relatively low voltage (typically -55 V), which causes the actuator 4 to contract, thus lifting the valve needle 6 away from the valve needle seat 8. An injector responsive to such a voltage transition is referred to as a 'de-energise to inject' injector and is operable to carry out several operating cycles to deliver one or more fuel injection pulses within a single injection event. For example, the injection event may include one or more so-called 'pre-' or 'pilot' injection pulses, a main injection pulse, and one or more 'post' injection pulses. In general, several such fuel injection pulses within a single injection event are preferred to increase combustion efficiency of the engine.

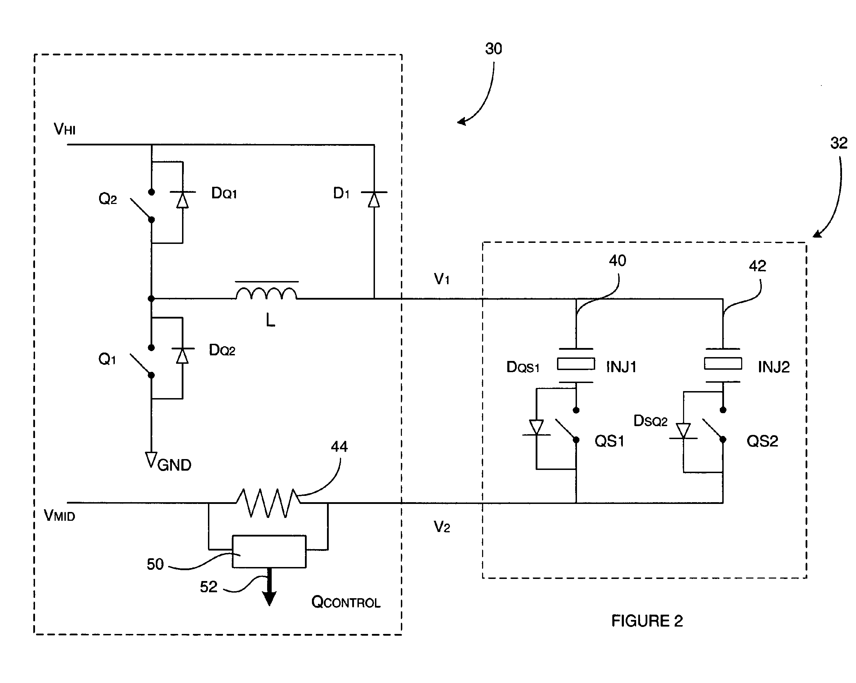

Referring also to Figure 2, the drive circuit 26 includes an injector charge/discharge switching circuit 30 (hereinafter 'switching circuit') that is connected to an injector bank circuit 32.

The switching circuit 30 includes three input voltage rails: a high voltage rail V_{HI} (typically 255 V) a mid voltage rail V_{MID} (typically 55 V) and a ground rail GND (i.e. 0 V). The switching circuit 30 is operable to connect a high side voltage output V1 to either the high voltage rail V_{HI} or the ground rail GND by means of first and second device activation switch means Q1, Q2 to which the injector bank 32 is connected, through an inductor L. A diode D1 is connected between the high side voltage output V1 and the high voltage rail V_{HI} and is oriented to permit current to flow from the high side voltage output V1 to the high voltage rail V_{HI} but to prevent current flow from the high voltage rail V_{HI} to the high side voltage output V1. A low side voltage output V2 is also provided in the switching circuit 30 and is connected to the mid voltage rail V_{MID}.

The injector bank circuit 32 provides a means to group one or more injectors together (only two of which are shown in Figure 2) and comprises first and second branches 40, 42 both of which are connected in parallel between the high side voltage output V1 and the low side voltage output V2 of the switching circuit 30. Thus, the high side voltage output V1 of the switching circuit 30 is also a high side voltage input to the bank circuit 32. Likewise, the low side voltage output V2 of the switching circuit 30 is a low side voltage input to the bank circuit 32.

Each branch 40, 42 of the injector bank circuit 32 includes a respective injector INJ1, INJ2 and an associated injector select switch QS1, QS2 by which means either one of the injectors INJ1, INJ2 can be selected for operation, as will be described later. Each injector select switch QS1, QS2 includes a respective diode D_{QS1}, D_{QS2} connected across it for the purposes of injector charging without requiring activation of the associated injector select switch. It should be appreciated that although the first and second injectors INJ1 and INJ2 are shown as integral to the bank circuit 32 in Figure 2, in practice the bank circuit 32 would be remote from the injectors INJ1, INJ2 and connected thereto by way of power supply leads.

It should be mentioned at this point that the piezoelectric actuator 4 of each injector 2 is considered electrically equivalent to a capacitor, the voltage difference between V1 and V2 determining the amount of electrical charge stored by the actuator 4 and, thus, the position of the injector valve needle 6.

The first switch means Q1 of the switching circuit 30, when activated, connects the high side voltage output V1 to the ground rail GND via the inductor L. Therefore, charge from the injector (hereafter the selected injector will be referred to as INJ1) is permitted to flow from the selected injector INJ1, through the inductor L and switch means Q1 to the ground rail GND, thereby serving to discharge the injector INJ1 during an injector discharge phase. Hereinafter, the first switch means will therefore be referred to as the 'discharge select switch' Q1. A diode D_{Q1} is connected across the second switch means Q2 and is oriented to permit current to flow from the inductor L to the high voltage rail V_{HI} when the discharge select switch Q1 is deactivated, thus guarding against voltage peaks across the inductor L.

In contrast, the second switch means Q2, when activated, connects the high side voltage output V1 to the high voltage rail V_{HI} via the inductor L. In circumstances where the injector INJ1 is discharged, activating the second switch means Q2 causes charge to flow from the high voltage rail V_{HI}, through the second switch means Q2 and the inductor L, and into the injector INJ1, during an injector charge phase, until an equilibrium voltage is reached (the voltage due to charge stored by the actuator 4 equals the voltage difference between the high side and the low side voltage outputs V1, V2). Hereinafter, the second switch means Q2 will be referred to as the 'charge select switch'. A diode D_{Q2} is connected across the discharge select switch Q1 and is oriented to permit current to flow from the ground rail GND through the inductor L to the high side output V1 when the charge select switch Q2 is deactivated, thus guarding against voltage peaks across the inductor L.

It should be appreciated that the inductor L constitutes a bidirectional current path since current flows in a first direction through the inductor L during the discharge phase and in an opposite direction during the injector charge phase.

The low side voltage output V2 of the injector bank circuit 32 is connected to the mid voltage rail V_{MID} via a voltage sense resistor 44. A current sensing and comparator means 50 (hereinafter 'comparator module') is connected in parallel with the sense resistor 44 and is operable to monitor the current flowing therethrough. In response to the current flowing through the resistor 44, the comparator module 50 outputs a control signal 52 (hereafter Q_{CONTROL}) that controls the activation status of the discharge select switch Q1 and the charge select switch Q2 so as to regulate the peak current flowing out of, or into, the operating injector INJ1. In effect, the comparator module 50 controls the activation status of the switches Q1 and Q2 to 'chop' the injector current between maximum and minimum current limits and achieve a predetermined average charge or discharge current that is commanded by the ICU 20. In the art, it is known to refer to the commanded average charge or discharge current as the current 'set point'. By this means, a high degree of control is afforded over the amount of electrical charge that is transferred from the injector INJ1 during a discharge phase and, conversely, transferred to the injector INJ1 during a charge phase.

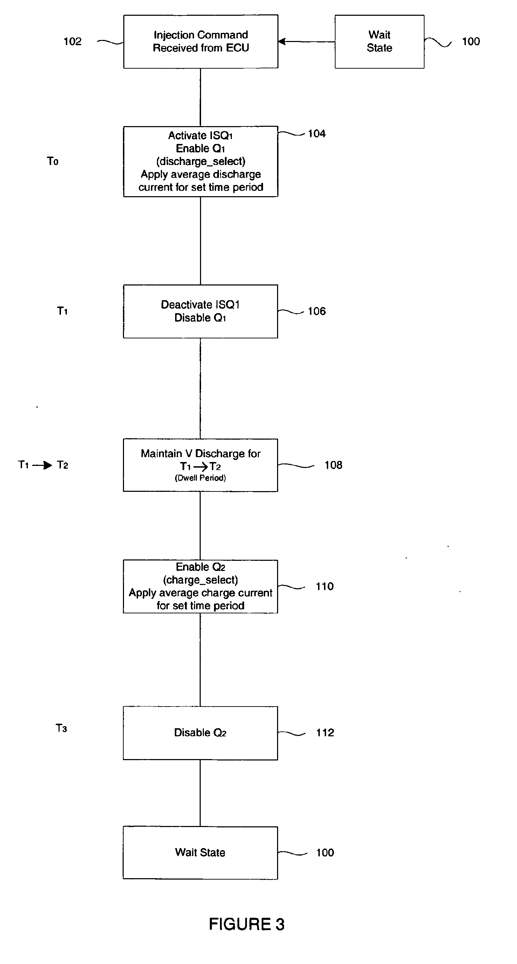

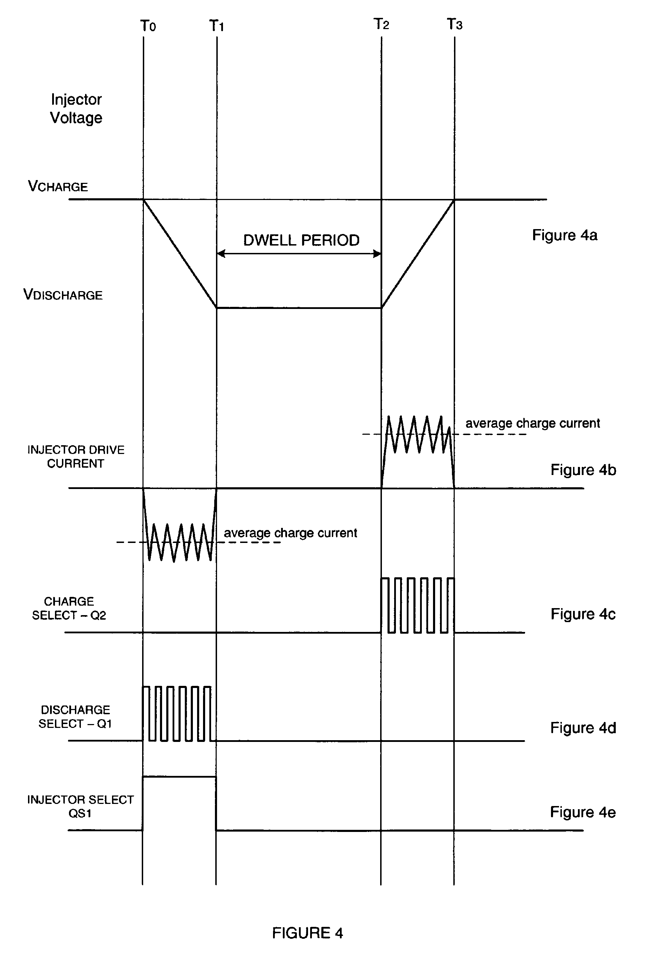

The operation of the injector drive circuit 26 during a typical discharge phase, followed by a charge phase, is described below with reference to Figure 3, which is a flow chart of a known control regime, and Figures 4a to 4e which show actuator voltage, actuator current and the status of switches Q1, Q2 and QS1, respectively.

Initially, prior to time T₀, the injector drive circuit 26 is at equilibrium, that is to say both injectors INJ1 and INJ2 are fully charged such that no fuel injection is taking place. In these circumstances, the ICU 20 is in a wait state, indicated at step 100, awaiting an injection command signal from the ECU 22.

Following receipt of an injection command from the ECU 22 at step 102, the ICU 20 selects the injector that it is required to operate at step 104. As mentioned above, for the purposes of this description, the selected injector is the first injector, INJ1. At substantially the same time, the ICU 20 initiates the discharge phase by enabling the discharge select switch Q1 so as to cause the injector INJ1 to discharge. The comparator module 50 outputs the Q_{CONTROL} signal between T₀ and T₁ to repeatedly deactivate and reactivate the discharge select switch Q1 such that the current remains within predetermined limits and, therefore, a predetermined average discharge current level is maintained through the injector INJ1.

The ICU 20 applies the predetermined average discharge current level (i.e. 'set point') to the selected injector INJ1 for a period of time (between T₀ to T₁) that is sufficient to transfer a predetermined amount of charge from the injector INJ1, hence initiating an injection event. The timing of the discharge phase is read from a timing map that relates discharge time against fuel delivery volume. At time T₁ (step 106), the ICU 20 deactivates the first injector select switch QS1 and disables the discharge select switch Q1, thus terminating the control signal Q_{CONTROL}, to prevent the injector discharging further. Thus, during the time period T₀ to T₁ the voltage across the injector INJ1 drops from a charged voltage level V_{CHARGE} to a discharged voltage level V_{DISCHARGE}, as indicated in Figure 4a.

At step 108, the ICU 20 maintains the injector INJ1 at the discharged voltage level V_{DISCHARGE} for a predetermined dwell period, T₁ to T₂, such that the injector valve needle 6 is held open to perform an injection. At the end of the dwell period, at step 110, the ICU 20 enables the charge select switch Q2 in order to start the injector charge phase so as to terminate injection. As a result, the high side voltage output V1 of the switching circuit 30 is connected to the high voltage rail V_{HI} and charge begins to transfer to the injector INJ1.

As the current flowing into the injector INJ1 increases, the comparator module 50 monitors the current flowing through the sense resistor 44 and controls the activation status of the charge select switch Q2, via the control signal Q_{CONTROL}, to ensure a predetermined average charging current level or 'set point'. Between time T₂ and T₃, the ICU 20 applies the predetermined average charging current level to the injector INJ1 for a period of time that is sufficient to transfer a predetermined amount of charge onto the injector INJ1, thus terminating an injection event. At time T₃ (step 112), the ICU 20 disables the charge select switch Q2 and returns to the waiting step 100 ready for initiation of another injection event.

In the above described injector control regime, an injection event is initiated by removing a predetermined amount of charge from the selected injector INJ1 that is calculated to provide the required extent of movement of the actuator 4. This type of control regime is known as 'charge control' since a predetermined amount of charge is transferred from, or to, the injector by driving an average current level for a predetermined time period in accordance with the relationship Q(charge) = I(current) x T(time).

However, one drawback with the known control regime is that it is an open loop process and, at present, there is no way of determining if the average current level achieved during a discharge and/or a charge phase is equal to the commanded average current level that is determined by the ECU 22.

### Summary of the Invention

It is against this background that the invention provides a method of operating a piezoelectric device having a piezoelectric actuator comprising enabling a device activation switch means to cause electrical current flow through the actuator to increase (i.e. increasing the charge transfer rate), disabling the device activation switch means to cause the current through the actuator to decrease (i.e. decreasing the charge transfer rate), monitoring the status of the device activation switch means, measuring the time period between the step of enabling and disabling the device activation switch means, and calculating the average current (i.e. charge transfer rate) based on the measured time period.

Advantageously, therefore, the invention provides a feedback mechanism regarding the average charge transfer rate that is applied to the actuator during a discharge and/or charge phase, where it is not possible to monitor the average charge rate directly.

The method of the invention is applicable to de-energise-to-inject injectors and also energise-to-inject injectors.

Preferably, the method includes repeatedly enabling and disabling the activation switch means so as to provide a predetermined average current flow associated with the actuator and measuring the time period between the first instance of enabling the device activation switch means and the first instance of disabling the device activation switch means, within a single device operating cycle.

In the preferred embodiment of the invention, in order to minimise the impact of the method of the invention on the processor loading of an associated engine controller, the calculating step includes referring to a look up table that stores a plurality of average actuator current values that correspond to a respective measured time period value.

Alternatively, however, the calculating step may include using the measured time period value to calculate the average current value in real time based on known parameter values of an associated actuator control circuit.

In the preferred embodiment, the calculated average current value is compared with a predetermined value and a system fault flag may be set if the aforesaid values are not substantially equal, or within a predetermined threshold of each other.

In addition, or in the alternative, the result of the comparison step is fed back to an actuator control means which is operable to control the average current in a closed loop manner.

According to a second aspect of the invention there is provided a computer program product comprising at least one computer program software portion which, when executed in an executing environment, is operable to implement the method of the invention as described above.

In a third aspect of the invention there is provided a data storage medium having the or each computer software portion according to the second aspect of the invention

In a fourth aspect of the invention, there is provided a microcomputer provided with a data storage medium according to the third aspect of the invention.

It should be noted at this point that the terms 'close' and 'activate' are synonymous when used in connection with a switch and are intended to include the actuation of any suitable switching means to create an electrical connection across the switch. Similarly, the terms 'open' and 'deactivate' are synonymous in the context of a switch and are intended here to include the actuation of any suitable switching means to break an electrical connection across the switch.

### Brief Description of the Drawings

Reference has already been made to Figures 1, 2, 3 and 4a to 4e which show a schematic representation of a known piezoelectric injector 2, its associated control system, and a known control regime, respectively. In order that the invention may be more readily understood, reference will now be made, by way of example only, to the following figures, in which:
Figure 5 is a flow chart of a method according to an embodiment of the invention; and
Figure 6 is an enlarged view of Figure 4b and 4d and illustrates a principle of operation of the embodiment in Figure 5.

### Detailed Description of the Preferred Embodiments

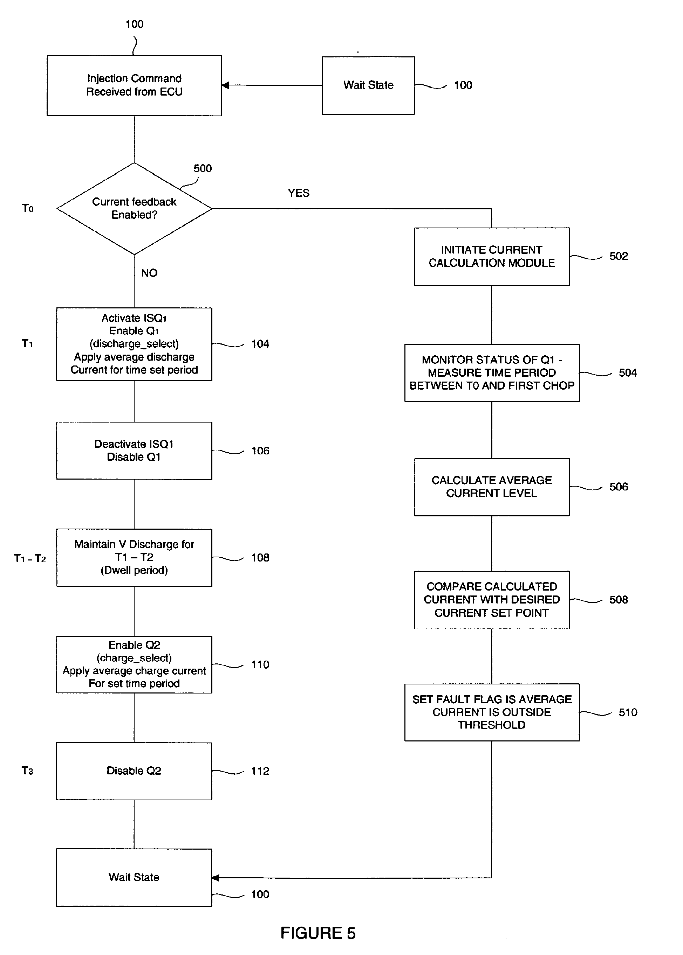

Referring to Figure 5, a method in accordance with an embodiment of the invention is run by the ICU 20 in Figure 1 in parallel with the injector activation method as described above with reference to Figure 3. It should, therefore, be appreciated that the basic operation of the control circuit 26 is not changed by the invention and, thus, steps 104 to 112 are the same as in Figure 3 so will not be described again here in detail. For the avoidance of doubt, the description above relating to the operation of the known injector control circuit 26 is incorporated herein by reference.

Following the receipt of an injection command from the ECU 22 at step 102, the ICU 20 checks, at step 500, to see whether a current calculation function is enabled within the ECU 22. If the check is positive, the current calculation module is initiated at step 502.

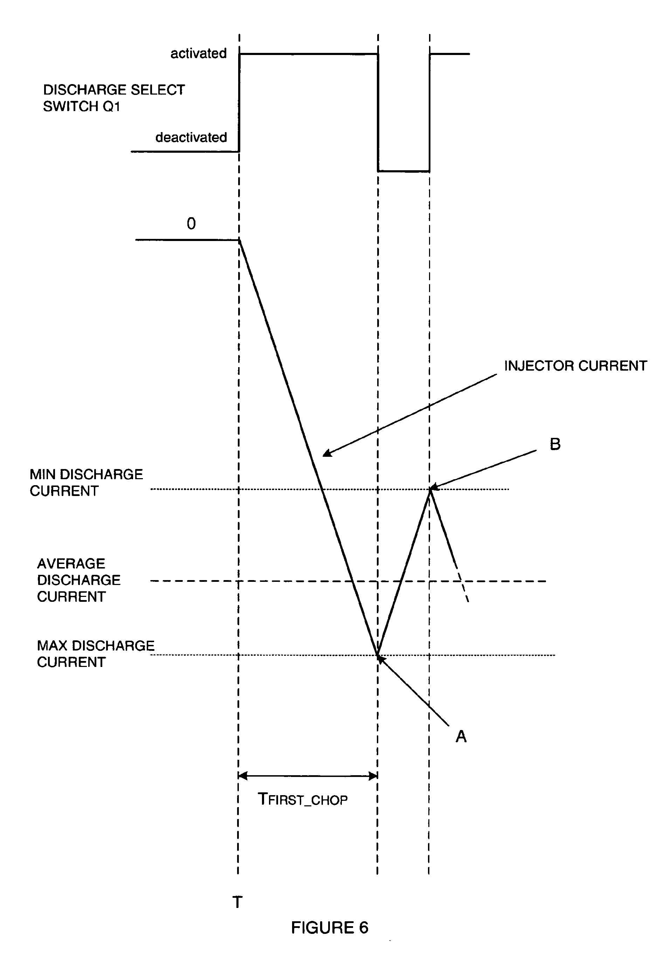

At this point, reference is made to Figure 6 that shows the injector current waveform of Figure 4b, and the discharge select switch status of Figure 4e, in more detail. At the point the discharge select switch Q1 is activated, at T₀, the injector current begins to increase negatively (i.e. charge is transferred from the injector INJ1). As has been described above, the comparator module 50 monitors the injector current and operates the discharge select switch Q1 to ensure that the current remains within predetermined maximum and minimum thresholds. As can be seen in Figure 6, the injector drive current increases (negatively) approximately linearly until it reaches the max discharge current threshold. At this point, marked as 'A' on Figure 6, the comparator module 50 outputs the control signal Q_{CONTROL} that deactivates the discharge select switch Q1 and, thus, the injector current begins to decay back towards zero, the rate of decay being dependent on the value of the inductor L in the drive circuit 26.

However, at the point the injector drive current reaches a minimum discharge current level, marked as 'B' on Figure 6, the comparator module 50 operates to re-active the discharge select switch Q1 such that current once again begins to increase negatively.
Due to this 'chopping' between maximum and minimum current thresholds, an average discharge current level is achieved, which the ICU 20 continues to apply to the injector for a predetermined time period so as to transfer a predetermined amount of charge from the injector.

Following initiation of the current calculation module at step 502, the ICU 20 monitors the status of the discharge select switch Q1, at step 504, and measures the time between the initial activation thereof (at T₀) and the first chopping point 'A', as indicated on Figure 6 as T_{FIRST_CHOP}. Thus, the measured time period T_{FIRST_CHOP} is between the first instance of activating the discharge select switch Q1 and the first instance of disabling the discharge select switch Q1 during a main fuel injection pulse.

At step 506, the ICU 20 calculates the average injector discharge current by referring to a look up table (not shown). The look up table stores a plurality of average injector discharge current values, each of which corresponds to a respective value of T_{FIRST_CHOP.} The look up table is populated during system testing.

Following calculation of the average injector discharge current level, at step 508 the calculated value is compared with the average injector discharge current level, or 'set point', that is commanded by the ECU 22. This comparison step is an important diagnostic tool since it is vital to the accuracy of the system that the calculated average injector discharge current level is substantially equal to the commanded set point. At step 510, if the commanded set point and the calculated average injector discharge current level differ by an amount that is outside a predetermined threshold, the ICU 20 sets a fault flag which is detectable by the ECU 22 such that appropriate action can be taken. For example, a fault can be logged in the system to initiate a maintenance action.

The process then terminates and awaits the initiation of the next fuel injection command from the ECU 22.

Since the injector discharge current is not measurable directly, the invention provides feedback mechanism of the current, or rate of charge, that is being transferred from the injector during a discharge phase. This is advantageous since action can be taken if the average injector discharge current is not what the system is commanding so faults can be detected immediately before they can cause any damage to the engine.

The skilled person would appreciated that various modifications may be made to the embodiment described above without departing from the inventive concept, as defined by the claims. For example, although the invention has been described above in relation to the calculation of the average injector discharge current, the skilled person would appreciate that the principle of the invention could similarly be applied to the calculation of the average injector charge current during a charging phase.

Also, in an alternative embodiment, rather than merely providing a means of diagnosing a drifting average injector discharge current level, the calculated average injector discharge current level may be used by the ICU 20 in a closed loop control regime that alters the commanded set point so as to minimise the error between the desired average injector discharge current and the calculated average injector discharge current. In this way, the system can automatically compensate for minor variations in the charge transfer rate. However, a fault diagnosis means may still be provided to indicate if too great a compensation is being made to the set point, such that it may be indicative of a system fault.

Although in the preferred embodiment the values of average injector discharge current are derivable by way of a look up table, it should be appreciated that this need not be the case and that the step of calculating the average injector discharge current may be performed in real time in accordance with the relationship V/L = di/dt, where 'V' is the voltage across the inductor during a discharge phase, 'L' is the inductance of the inductor, and 'di/dt' is the rate of change of injector current during the discharge phase. In this embodiment, the value of the inductor L in the injector drive circuit 26 is a known parameter and the voltage drop across the actuator 4 during T_{FIRST_CHOP} is a parameter that is measurable by the ICU 20.

## Claims

1. A method of operating a piezoelectric device (2) having a piezoelectric actuator (4) comprising:
enabling a device activation switch means (Q1, Q2) to cause current flow through the actuator (4) to increase;
disabling the device activation switch means (Q1, Q2) to cause current flow through the actuator (4) to decrease;
monitoring the status of the device activation switch means (Q1, Q2) and
measuring the time period between the steps of enabling and disabling the device activation switch means (Q1, Q2); and
calculating an average current value based on the measured time period.

2. The method of claim 1, wherein the method includes repeatedly enabling and disabling the device activation switch means so as to provide a predetermined average current flow through the actuator (4).

3. The method of claim 1 or claim 2, wherein the measuring step includes measuring the time period between the first instance of enabling the device activation switch means and the first instance of disabling the device activation switch means, within a single device operating cycle.

4. The method of any one of claims 1 to 3, wherein the calculating step includes referring to a look up table that stores a plurality of average actuator current values that correspond to a respective measured time period value.

5. The method of any one of claims 1 to 3, wherein the calculating step includes using the measured time period value to calculate the average current value in real time based on known parameter values of an associated actuator control circuit.

6. The method of any one of claims 1 to 5, including comparing the calculated average current value with a predetermined value.

7. The method of claim 6, including setting a system fault flag if the calculated average current is not equal to the predetermined value.

8. The method of claim 7, wherein the equality checking step includes applying a predetermined threshold to the predetermined value.

9. The method of any one of claims 6 to 8, wherein the result of the comparison step is fed back to an actuator control means so as to control the average current in a closed loop manner.

10. The method of any one of claims 1 to 9, wherein the steps of enabling and disabling the device activation switch means (Q1, Q2) are performed repeatedly so as to provide a chopped current flow through the actuator (4) during a device discharge phase and/or a device charge phase.

11. The method of any of claims 1 to 10, wherein the piezoelectric device is a piezoelectrically operated fuel injector.

12. A computer program product comprising at least one computer program software portion which, when executed in an executing environment, is operable to implement the method of any one of claims 1 to 11.

13. A data storage medium having the or each computer software portion of claim 12 stored thereon.

14. A microcomputer provided with the data storage medium of claim 13.
